# EUROPÄISCHE PATENTANMELDUNG

(11) **EP 1 481 865 A2**
(43) Veröffentlichungstag der Anmeldung: **01.12.2004**
(21) Anmeldenummer: 04008991.4
(22) Anmeldetag: 15.04.2004
(51) Int. Cl.: B60T 8/88, B60T 13/66, B60T 17/22

(54) **Bremsvorrichtung für ein Schienenfahrzeug**

(30) Priorität: 27.05.2003 DE 10324075
(71) Anmelder: SIEMENS AKTIENGESELLSCHAFT, 80333 München (DE)
(72) Erfinder: Dirauf, Michael, 96231 Bad Staffelstein (DE); Gotthardt, Klaus-Jürgen, 91093 Hessdorf (DE); Pätzold, Hanko, 91056 Erlangen (DE); Reuner, Falko, 91052 Erlangen (DE)

(57) **Zusammenfassung**

Die Erfindung betrifft eine Bremsvorrichtung für ein Schienenfahrzeug mit mindestens einer Schalteinrichtung (2), die mit Bremsen (4) verbunden ist. Es ist vorgesehen, dass die mindestens eine Schalteinrichtung (2) und die Bremsen (4) über einen sicheren Kommunikationsbus (1) in Verbindung stehen. Zu seiner Funktionsüberprüfung ist der sichere Kommunikationsbus (1) mit mindestens einem sicheren Slavesensor (7) zum Senden eines bekannten Telegramms und mit mindestens einem Sicherheitsmonitor (8) verbunden. Dieser dient zum Erkennen des Telegramms und zur Einleitung des Bremsens bei fehlendem oder falschem Telegramm. Er steht dazu mit der Bremse (4) in Verbindung.

## Beschreibung

Die Erfindung betrifft eine Bremsvorrichtung für ein Schienenfahrzeug mit mindestens einer Schalteinrichtung, die mit Bremsen verbunden ist.

Eine solche Bremsvorrichtung ist aus der DE 100 01 359 C2 bekannt. Als Verbindung zwischen den Schalteinrichtungen und den Bremsen dient dabei eine Triebzug-Sicherheitsschleife, die mehrere Relais aufweist. Dadurch ist es möglich, einen Triebzug, mit zwei Führerständen, zuverlässig vom jeweils besetzten Führerstand aus zu bremsen. Es ist sogar möglich, einen Triebzugverband, der aus zwei oder mehreren solcher Triebzüge besteht, durch den Einsatz der Sicherheitsschleife zuverlässig zu bremsen.

Der Erfindung liegt die Aufgabe zugrunde, eine Bremsvorrichtung für ein Schienenfahrzeug anzugeben, die ohne aufwändige Teile auskommt und darüber hinaus Fehler zuverlässig zu erkennen gestattet. Dabei sollen alle für den Eisenbahnbetrieb notwendigen Sicherheitsvorschriften erfüllt sein.

Die Aufgabe wird gemäß der Erfindung dadurch gelöst, dass die mindestens eine Schalteinrichtung und die Bremsen über einen sicheren Kommunikationsbus in Verbindung stehen, der zu seiner Funktionsüberprüfung mit mindestens einem sicheren Slavesensor zum Senden eines bekannten Telegramms und mit mindestens einem Sicherheitsmonitor zum Erkennen des Telegramms und zur Einleitung des Bremsens bei fehlendem oder falschem Telegramm in Verbindung steht.

Ein sicherer Kommunikationsbus und insbesondere ein Sicherheitsmonitor sind aus der Siemens-Druckschrift "Alles über AS-Interface. Ein Überblick für Einsteiger und Anwender" vom April 2001 bekannt.

Durch die Verwendung eines sicheren Kommunikationsbusses in einer Bremsvorrichtung für ein Schienenfahrzeug wird insbesondere der Vorteil erzielt, dass einerseits die Bremsen des Schienenfahrzeuges mit einfachen Mitteln zuverlässig angesteuert werden können und dass darüber hinaus ein Fehler so schnell erkannt werden kann, dass eine Schnellbremsung durchführbar ist, bevor schwerwiegende Folgen autreten können. Es ist also vorteilhafterweise eine sichere Bremsvorrichtung gegeben.

Das Telegramm ist beispielsweise eine festgelegte Bitfolge, die insbesondere vier Bit umfasst. Immer wenn diese Bitfolge nicht oder in veränderter Form am Sicherheitsmonitor eintrifft, wird das Schienenfahrzeug abgebremst. Es ist also ein sicherer Betrieb des Schienenfahrzeuges durchführbar, ohne dass aufwändige und teuere Bauteile benötigt würden.

Es können sowohl ein Leitungsbruch, als auch ein Kurzschluss oder eine Fremdspannung erkannt werden.

Insbesondere ist an den sicheren Kommunikationsbus eine eigene Spannungsquelle zur Versorgung der Kommunikationsbus-Teilnehmer mit elektrischer Energie angeschlossen.

Damit wird vorteilhafterweise über nur ein Kabel die Energieversorgung und die Datenübermittlung ermöglicht. Man kommt mit wenig Leitungen und entsprechend wenig Schaltungen aus, was die Kosten für eine sichere Bremsvorrichtung gegenüber früher üblichen Kosten deutlich verkleinert.

Der sichere Kommunikationsbus ist beispielsweise von anderen Vorrichtungen des Schienenfahrzeugs, die nicht Teil der Bremsvorrichtung sind, funktional entkoppelt. Das bedeutet, dass die Bremsvorrichtung autark arbeitet. Vorteilhafterweise können dadurch keine unerwünschten elektrischen Potentiale, die die Funktionsüberprüfung stören könnten, zum sicheren Kommunikationsbus gelangen.

Mehrere sichere Kommunikationsbusse können beispielsweise über Einzelleitungen koppelbar sein. Auf diese Weise ist ein redundanter Aufbau möglich. Auch können für einzelne Abschnitte eines Zuges getrennte Bremsvorrichtungen aufgebaut sein, die nur bei Bedarf über die Einzelleitungen koppelbar sind.

Beispielsweise ist ein sicherer Kommunikationsbus eines ersten Schienenfahrzeugs mit mindestens einer Überleitungseinrichtung verbunden, die mit einer entsprechenden Überleitungseinrichtung eines zweiten Schienenfahrzeugs kuppelbar ist. Damit wird der Vorteil erzielt, dass in einfacher Weise eine Bremsvorrichtung mit den genannten Vorteilen auch bei mehreren aneinander gekuppelten Schienenfahrzeugen eingesetzt werden kann. Häufig werden nämlich zwei oder noch mehr Triebzüge, die jeweils bereits zwei Führerstände haben, aneinander gekuppelt. Dann ist nur ein Führerstand von mindestens vier Führerständen besetzt. Die Überleitungseinrichtung ermöglicht in diesem Fall, dass im ganzen Zugverband in gleicher Weise gebremst werden kann. Insbesondere wird jedoch der Vorteil erzielt, dass die sicheren Kommunikationsbusse der einzelnen Triebzüge mit nur einer Überprüfung auf ihre Funktionsfähigkeit hin getestet werden können.

Die Bremsvorrichtung nach der Erfindung ist gleichermaßen geeignet für Lokomotiven, Straßenbahnen, U-Bahnen und Transrapid, insbesondere aber für Triebzüge mit zwei Führerständen und besonders für kuppelbare Zugverbände aus mindestens zwei Triebzügen.

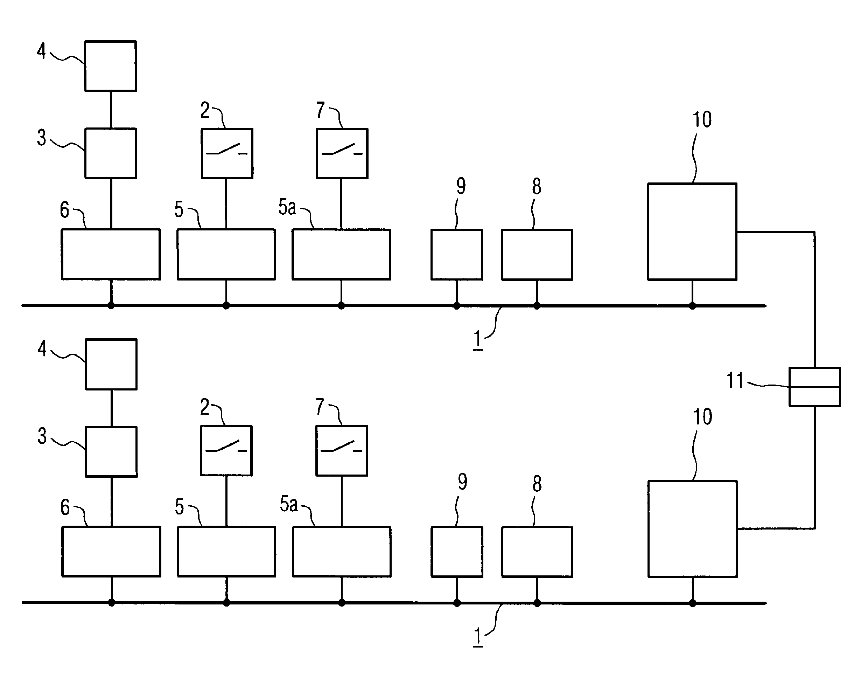

Ein Ausführungsbeispiel für die Bremsvorrichtung nach der Erfindung wird anhand der Zeichnung näher erläutert:

Ein sicherer Kommunikationsbus 1 in einem ersten Schienenfahrzeug dient zur Übertragung von Signalen von einem Sensor 2 an eine Steuereinheit 3 die eine Bremse 4 steuert. Der Sensor 2 ist über ein Eingangskoppelmodul 5 mit dem sicheren Kommunikationsbus 1 verbunden, der über ein Ausgangskoppelmodul 6 mit der Steuereinheit 3 verbunden ist, die ihrerseits mit der Bremse 4 in Verbindung steht. Von Sensor 2 gehen für die Bremssteuerung relevante Signale aus.

Zur Funktionsüberprüfung der Kommunikationseinrichtung steht mit dem sicheren Kommunikationsbus 1 über ein anderes Eingangskoppelmodul 5a ein sicherer Slavesensor 7 in Verbindung. Der sichere Slavesensor 7 sendet ein bekanntes Telegramm, nämlich eine Bitfolge aus vier Bit. Dieses Telegramm wird von einem Sicherheitsmonitor 8 empfangen und ausgewertet. Sollte das Telegramm nicht ankommen oder unvollständig oder fehlerhaft sein, wird vom Sicherheitsmonitor 8 die Bremse 4 ausgelöst.

Zur Versorgung der Bremsvorrichtung mit elektrischer Energie direkt über den sicheren Kommunikationsbus 1 ist dieser mit einer Spannungsquelle 9 verbunden. Die durch den Kommunikationsbus 1 übermittelten Signale, die gegebenenfalls kodiert sein können, überlagern das für die Energieversorgung vorhandene Potential.

Falls mehrere Schienenfahrzeuge, insbesondere mehrere Triebzüge miteinander gekuppelt werden sollen, dann ist mit dem sicheren Kommunikationsbus 1 eine Überleitungseinrichtung 10 verbunden, die über eine Kupplung 11 mit einer gleichartigen Überleitungseinrichtung 10 eines anderen Triebzuges in Verbindung steht.

In der Zeichnung ist eine zweite Bremsvorrichtung, die genauso wie die erste Bremsvorrichtung aufgebaut ist, gezeigt. Die zweite Bremsvorrichtung ist in einem zweiten Triebzug eingebaut. Gleiche Teile haben gleiche Bezugszeichen.

Vorteilhafterweise ermöglicht die Bremsvorrichtung nach der Erfindung eine zuverlässige Signalübermittlung und ist durch den Einsatz eines sicheren Kommunikationsbusses 1 leicht überprüfbar. Insbesondere kann über den sicheren Kommunikationsbus 1 auch die Versorgung mit elektrischer Energie erfolgen.

## Patentansprüche

1. Bremsvorrichtung für ein Schienenfahrzeug mit mindestens einer Schalteinrichtung (2), die mit Bremsen (4) verbunden ist,
**dadurch gekennzeichnet, dass** die mindestens eine Schalteinrichtung (2) und die Bremsen (4) über einen sicheren Kommunikationsbus (1) in Verbindung stehen, der zu seiner Funktionsüberprüfung mit mindestens einem sicheren Slavesensor (7) zum Senden eines bekannten Telegramms und mit mindestens einem Sicherheitsmonitor (8) zum Erkennen des Telegramms und zur Einleitung des Bremsens bei fehlendem oder falschem Telegramm in Verbindung steht.

2. Bremsvorrichtung nach Anspruch 1,
**dadurch gekennzeichnet, dass** das Telegramm eine festgelegte Bitfolge ist.

3. Bremsvorrichtung nach einem der Ansprüche 1 oder 2,
**dadurch gekennzeichnet, dass** an den sicheren Kommunikationsbus (1) eine eigene Spannungsquelle (9) zur Versorgung der Kommunikationsbus-Teilnehmer mit elektrischer Energie angeschlossen ist.

4. Bremsvorrichtung nach einem der Ansprüche 1 bis 3,
**dadurch gekennzeichnet, dass** der sichere Kommunikationsbus (1) von anderen Vorrichtungen des Schienenfahrzeugs funktional entkoppelt ist.

5. Bremsvorrichtung nach einem der Ansprüche 1 bis 4,
**dadurch gekennzeichnet, dass** mehrere sichere Kommunikationsbusse (1) über Einzelleitungen koppelbar sind.

6. Bremsvorrichtung nach Anspruch 5,
**dadurch gekennzeichnet, dass** ein sicherer Kommunikationsbus (1) eines ersten Schienenfahrzeugs mit mindestens einer Überleitungseinrichtung (10) verbunden ist, die mit einer entsprechenden Überleitungseinrichtung (10) eines zweiten Schienenfahrzeugs kuppelbar ist.
